(19) Europäisches Patentamt / European Patent Office / Office européen des brevets

(11) **EP 4 671 396 A1**

(12) **EUROPEAN PATENT APPLICATION**
published in accordance with Art. 153(4) EPC

(43) Date of publication:
**31.12.2025 Bulletin 2026/01**

(21) Application number: **24760314.5**

(22) Date of filing: **19.02.2024**

(51) International Patent Classification (IPC):
$C22C\ 19/03^{(2006.01)}$    $C09K\ 5/06^{(2006.01)}$
$C22C\ 14/00^{(2006.01)}$    $C22C\ 30/02^{(2006.01)}$
$C22F\ 1/00^{(2006.01)}$    $C22F\ 1/10^{(2006.01)}$
$C22F\ 1/16^{(2006.01)}$    $C22F\ 1/18^{(2006.01)}$

(52) Cooperative Patent Classification (CPC):
**C09K 5/06; C22C 14/00; C22C 19/03; C22C 30/02;
C22F 1/00; C22F 1/10; C22F 1/16; C22F 1/18;
Y02E 60/14**

(86) International application number:
**PCT/JP2024/005809**

(87) International publication number:
**WO 2024/177015 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.02.2023 JP 2023027638**

(71) Applicant: **National Institute of Advanced Industrial
Science and Technology
Chiyoda-ku
Tokyo 100-8921 (JP)**

(72) Inventors:
• **NAKAYAMA, Hiroyuki**
 **Tsukuba-shi, Ibaraki 305-8560 (JP)**
• **FUJITA, Asaya**
 **Tsukuba-shi, Ibaraki 305-8560 (JP)**
• **KINEMUCHI, Yoshiaki**
 **Tsukuba-shi, Ibaraki 305-8560 (JP)**

(74) Representative: **Boult Wade Tennant LLP
Salisbury Square House
8 Salisbury Square
London EC4Y 8AP (GB)**

(54) **TINI-BASED ALLOY AND THERMAL STORAGE DEVICE INCLUDING SAME, AND METHOD FOR PRODUCING TINI-BASED ALLOY**

(57) A TiNi-based alloy having a martensite start temperature (Ms temperature) and satisfying the following formula (1):

$$|\text{Ms} - \text{Ms}_{900°C}| \geq 2°C \cdots (1)$$

wherein Ms is an Ms temperature (°C) of the alloy measured according to JIS H7101:2002, and $\text{Ms}_{900°C}$ is an Ms temperature (°C) of the alloy measured according to JIS H7101:2002 after the alloy is heated at 900°C for 1 hour.

[FIG. 2]

**Description**

TECHNICAL FIELD

The present disclosure relates to a TiNi-based alloy, a thermal storage device including the same, and a method for producing the TiNi-based alloy.

BACKGROUND ART

From the viewpoint of effective use of energy, a thermal storage material has been developed in which surplus heat is accumulated in a material and the heat can be freely dissipated and used when necessary. In the development of thermal storage materials, it is generally conceivable to utilize endothermic and exothermic heat associated with phase transformation of the material.

Conventionally, as a thermal storage material, as represented by water or paraffin, a thermal storage material using transformation heat generated by a solid-liquid phase change is generally used. Such a material has very high transformation heat per volume (e.g., 200 J/cc or more).

However, the material has a very low thermal conductivity of about 1 W/mK, and it is difficult to efficiently take heat into the material and to dissipate heat to the outside of the material. In addition, it is difficult to maintain a regular shape of the material because it is necessary to encapsulate the liquid, and the shape of the material is also limited to a simple shape. Furthermore, the capsule serves as a heat barrier and deteriorates characteristics as a thermal storage material. In addition, the material has no large difference in endothermic and exothermic temperatures associated with phase transformation, and after the endothermic process at a predetermined temperature or higher, can dissipate heat to the outside of the material only at the predetermined temperature or lower. Furthermore, in the material, the trigger for the heat dissipation operation is only a temperature change, and heat cannot be intentionally dissipated by other external stimuli.

On the other hand, according to Non-patent Document 1 and Patent Document 1, oxide ceramics such as $Ti_2O_3$ and $VO_2$ exhibit phase transformation of solid (low temperature phase) to solid (high temperature phase). Furthermore, the transformation heat is about 200 to 250 J/cc, which is comparable to the transformation heat associated with the solid-liquid described above. In addition, in the case of $Ti_2O_3$, a high temperature phase in a state of 1 atm is transformed to a low temperature phase by increasing the pressure to a very high hydrostatic pressure of 300 atm, and heat can be dissipated to the outside of the material with the phase transformation. In addition, even when a large impact is applied with a hammer or the like, a low temperature phase is generated, and heat dissipation associated therewith is also possible.

However, the material also has a very small thermal conductivity of about 1 W/mK, and has a problem that it is difficult to efficiently take heat into the material. In addition, the material is poor in ductility and processability, and is difficult to process into a complicated shape. In addition, since the material is a brittle material, the material is easily broken when a high pressure and a large impact are applied to induce a low temperature phase as described above.

In recent years, it has been studied to use a diffusionless structural phase transformation alloy exhibiting a solid-solid phase change for a thermal storage material as a material having higher thermal conductivity than ceramics or the like and shape flexibility by processing. Non-patent Document 2 discloses that a TiNi-based alloy exhibiting martensitic transformation as a solid-solid phase change is used. In the TiNi-based alloy, the transformation finish temperature (Af temperature) to the high temperature phase (austenitic phase) during heating is the endothermic completion temperature, and the transformation start temperature (Ms temperature) to the low temperature phase (martensitic phase) during cooling is the heat dissipation start temperature. Therefore, the TiNi-based alloy can store heat in the temperature range of the Ms temperature to the Af temperature. According to Non-patent Document 2, in the TiNi-based alloy, high phase transformation heat of about 230 J/cc at the maximum can be generated, and transformation from a high temperature phase to a low temperature phase is induced with relatively small stress, and heat can be dissipated accordingly.

CONVENTIONAL ART DOCUMENT

PATENT DOCUMENT

Patent Document 1: WO2020/144982

NON-PATENT DOCUMENT

Non-patent Document 1: "Scientific Reports" (2019) 9: 13203

Non-patent Document 2: "J. Mater. Sci." (2021) 56:8243-8250

SUMMARY OF THE INVENTION

PROBLEMS TO BE SOLVED BY THE INVENTION

In the Non-patent Document 2, the phase transformation heat is controlled by controlling the composition of the TiNi-based alloy. However, in the alloy, when the composition is changed, the phase transformation temperature (for example, the Ms temperature which is the heat dissipation starting temperature), which is the operating temperature of the thermal storage material, also changes. In order to use a TiNi-based alloy as a thermal storage material in a wider range of applications, it is necessary to individually control the phase transformation heat and the phase transformation temperature.

The present disclosure has been made in view of such a situation, and an object thereof is to provide a TiNi-based alloy capable of individually controlling a phase transformation heat and a phase transformation temperature, another object thereof is to provide a thermal storage device including the TiNi-based alloy, and still another object thereof is to provide a method for producing the TiNi-based alloy.

MEANS FOR SOLVING THE PROBLEMS

Aspect 1 of the present invention is

a TiNi-based alloy having a martensite start temperature (Ms temperature) and satisfying the following formula (1):

$$|\mathrm{Ms} - \mathrm{Ms}_{900°C}| \geq 2°C \cdots (1)$$

wherein Ms is an Ms temperature (°C) of the alloy measured according to JIS H7101:2002, and $\mathrm{Ms}_{900°C}$ is an Ms temperature (°C) of the alloy measured according to JIS H7101:2002 after the alloy is heated at 900°C for 1 hour.

Aspect 2 of the present invention is

the TiNi-based alloy according to Aspect 1, further satisfying the following formula (2):

$$(\mathrm{Af} - \mathrm{Ms}) - (\mathrm{Af}_{900°C} - \mathrm{Ms}_{900°C}) \geq 2°C \cdots (2)$$

Af is an austenitic finish temperature (Af temperature) (°C) of the alloy measured according to JIS H7101:2002, and $\mathrm{Af}_{900°C}$ is an Af temperature (°C) of the alloy measured according to JIS H7101:2002 after the alloy is heated at 900°C for 1 hour.

Aspect 3 of the present invention is

the TiNi-based alloy according to Aspect 1 or 2, having a composition represented by the following formula (3):

$$\mathrm{Ti}_x\mathrm{Ni}_{100-x-y}\mathrm{M}_y \cdots \qquad (3)$$

x is a molar ratio (%) of Ti to the total number of moles of Ti, Ni and M in the alloy and satisfies $35 \leq x \leq 55$, y is a molar ratio (%) of M to the total number of moles of Ti, Ni and M in the alloy and satisfies $0 \leq y \leq 20$, and M is one or more selected from the group consisting of Cu, Co, Cr, Zr and Fe.

Aspect 4 of the present invention is
the TiNi-based alloy according to any one of Aspects 1 to 3, wherein a crystallite size of the alloy is 30 nm or less.
Aspect 5 of the present invention is
the TiNi-based alloy according to any one of Aspects 1 to 4, wherein the alloy is capable of dissipating heat upon application of external stress after being endothermically heated to a temperature of Af temperature or higher.
Aspect 6 of the present invention is
the TiNi-based alloy according to any one of Aspects 1 to 5, wherein the alloy has a plate shape, a wire shape, or a spring shape.
Aspect 7 of the present invention is

a thermal storage device including:

> the TiNi-based alloy according to any one of Aspects 1 to 6; and
> a heating unit capable of heating the TiNi-based alloy to a temperature equal to or higher than an austenitic finish temperature (Af temperature) of the TiNi-based alloy and lower than 200°C and capable of maintaining the temperature between a martensite start temperature (Ms temperature) and an austenitic finish temperature (Af temperature) of the TiNi-based alloy.

Aspect 8 of the present invention is
the method for producing the TiNi-based alloy according to any one of Aspects 1 to 6, the method including:

> processing a TiNi-based alloy material having a martensite start temperature (Ms temperature) by applying a cross-sectional area change rate of 20% or more; and
> heating the processed TiNi-based alloy material to 200 to 800°C.

TECHNICAL EFFECTS OF THE INVENTION

According to embodiments of the present invention, it is possible to provide a TiNi-based alloy capable of individually controlling the phase transformation heat and the phase transformation temperature, a thermal storage device including the same, and a method for producing the TiNi-based alloy.

BRIEF DESCRIPTION OF THE DRAWINGS

[Fig. 1] Fig. 1 shows X-ray diffraction patterns of Test Nos. 1 to 5.
[Fig. 2] Fig. 2 is a graph showing a temperature change during a four-point bending test of Test No. 5.
[Fig. 3] Fig. 3 is a graph showing a temperature change during a tensile test of Test No. 4.
[Fig. 4] Fig. 4 is a graph showing a temperature change during a tensile test of Test No. 5.
[Fig. 5] Fig. 5 shows a photograph of Test No. 16.
[Fig. 6] Fig. 6 is a graph showing a temperature change when tensile deformation is performed for Test No. 16.
[Fig. 7] Fig. 7 is a graph showing a temperature change when compressive deformation is performed for Test No. 16.

MODE FOR CARRYING OUT THE INVENTION

The present inventors have studied from various angles in order to realize a TiNi-based alloy in which the phase transformation heat and the phase transformation temperature can be individually controlled. As a result, the present inventors have found that it is possible to achieve a TiNi-based alloy having a phase transformation temperature different from a phase transformation temperature that can be usually indicated based on a predetermined composition by applying predetermined processing to the TiNi-based alloy exhibiting a predetermined Ms temperature to introduce defects (strain) and adjusting the number of defects by heating. That is, in the TiNi-based alloy according to the embodiments of the present invention, the difference between the Ms temperature changed by the strain applied by predetermined processing or the like and the Ms temperature (That is, the Ms temperature may be an Ms temperature that can be usually indicated based on a predetermined composition, and hereinafter also referred to as "$Ms_{900°C}$".) after heating at a high temperature (900°C) for 1 hour so as to remove the strain is 2°C or more. In other words, the fact that $|Ms - Ms_{900°C}| \geq 2°C$ means that predetermined processing or the like is performed and strain is applied in the TiNi alloy according to the embodiments of the present invention.
Hereinafter, details of each requirement defined by the embodiments of the present invention will be described.

<TiNi-based alloy>

A TiNi-based alloy according to embodiments of the present invention is a TiNi-based alloy having a martensite start temperature (Ms temperature) and satisfying the following formula (1).

$$|Ms - Ms_{900°C}| \geq 2°C \cdots (1)$$

Ms is an Ms temperature (°C) of the alloy measured according to JIS H7101:2002, and $Ms_{900°C}$ is an Ms temperature (°C) of the alloy measured according to JIS H7101:2002 after the alloy is heated at 900°C for 1 hour. The $Ms_{900°C}$ is an Ms temperature after heating so as to remove strain applied by predetermined processing or the like described later, and can be a temperature equivalent to the Ms temperature before applying predetermined processing or the like described later.

The TiNi-based alloy can individually control the phase transformation heat and the phase transformation temperature (That is, the phase transformation heat is mainly controlled by the composition, and the phase transformation temperature is mainly controlled by predetermined processing or the like (strain).), and can be used in a wider range of applications as a thermal storage material. The left side of the above formula (1) is preferably 4°C or more, more preferably, the left side of the above formula (1) is 6°C or more.

As described above, the TiNi-based alloy can store heat within a temperature range of, for example, the Ms temperature to the Af temperature. Therefore, in the TiNi-based alloy according to the embodiments of the present invention, the difference between the Af temperature and the Ms temperature is preferably large so as to widen the temperature range in which heat can be stored. The difference between the Af temperature and the Ms temperature is usually determined by the composition. In the embodiments of the present invention, the difference can be controlled by predetermined processing (and heat treatment) described later. The TiNi-based alloy according to the embodiments of the present invention preferably satisfies the following formula (2).

$$(Af - Ms) - (Af_{900°C} - Ms_{900°C}) \geq 2°C \cdots (2)$$

Af is an Af temperature (°C) of the alloy measured according to JIS H7101:2002, and $Af_{900°C}$ is an Af temperature (°C) of the alloy measured according to JIS H7101:2002 after the alloy is heated at 900°C for 1 hour. Note that $Af_{900°C}$ is an Af temperature after heating so as to remove strain applied by predetermined processing or the like described later, and can be a temperature equivalent to the Af temperature before applying predetermined processing or the like described later.

By satisfying the above formula (2), the thermal storage material can be used in a wider range of applications. The left side of the above formula (2) is preferably 4°C or more, more preferably, the left side of the above formula (2) is 5°C or more.

A TiNi-based alloy according to embodiments of the present invention contains at least Ti and Ni, and has an Ms temperature. An embodiment of the TiNi-based alloy having the Ms temperature includes a TiNi-based alloy having a composition of the following formula (3).

$$Ti_xNi_{100-x-y}M_y \cdots \qquad (3)$$

x is a molar ratio (%) of Ti to the total number of moles of Ti, Ni and M in the alloy and satisfies $35 \leq x \leq 55$, y is a molar ratio (%) of M to the total number of moles of Ti, Ni and M in the alloy (where, when M includes two or more elements, y is the total molar ratio of M (%)) and satisfies $0 \leq y \leq 20$, and M is one or more selected from the group consisting of Cu, Co, Cr, Zr and Fe.

In the above formula (3), x preferably satisfies $48 \leq x \leq 52$, and more preferably $49.5 \leq x \leq 50.5$. In addition, y preferably satisfies $0 \leq y \leq 10$, and more preferably $0 \leq y \leq 7.5$. These can contribute to improving the phase transformation heat of the TiNi-based alloy. M may not be included, and for example, only one element such as Cu may be contained, or two or more elements thereof may be contained.

The TiNi-based alloy according to the embodiments of the present invention may contain impurity elements in addition to Ti, Ni and M. The content of impurity elements is preferably small, and in one embodiment, the content of Ti, Ni and M in the TiNi-based alloy is preferably 90 mass% or more, and more preferably 99 mass% or more.

The TiNi-based alloy according to the embodiments of the present invention preferably has a crystallite size of 30 nm or less. Since the crystallite size is relatively small, strain for suppressing martensitic transformation is easily stored, and as a result, the left side of the above formula (1) and the left side of the above formula (2) are easily increased. The crystallite size is more preferably 25 nm or less, and still more preferably 15 nm or less. The lower limit of the crystallite size is not particularly limited, but may be, for example, 1 nm or more. In the embodiments of the present invention, the crystallite size is estimated by performing peak fitting using the split-type pseudo Voigt function using a peak present at a position (20 ≈ 41 to 42°) corresponding to the (11-1) plane having the highest diffraction intensity of the martensitic phase on the basis of, for example, the X-ray diffraction result (X-ray source: CuKα) measured at room temperature, and by the Scherrer equation shown in the following equation (4) from the obtained half value width.

$$d = 0.9\lambda/(B \cdot cos\theta) \cdots (4)$$

Here, d represents a crystallite size (nm), $\lambda$ represents a wavelength of an X-ray (nm), B represents a half value width (rad.), and θ represents a peak position (rad.).

In the TiNi-based alloy according to the embodiments of the present invention, the phase transformation (martensitic transformation) heat during cooling measured by differential scanning calorimetry (DSC) is preferably almost the same as the phase transformation heat during cooling measured by DSC after heating at 900°C for 1 hour, and for example, the difference therebetween may be within ±5 J/g, and more preferably within ±2 J/g.

The TiNi-based alloy according to the embodiments of the present invention can control the martensite finish temperature (Mf temperature) by predetermined processing (and heat treatment) described later. The TiNi-based alloy according to the embodiments of the present invention preferably satisfies the following formula (5).

$$|Mf - Mf_{900°C}| \geq 6°C \cdots (5)$$

Mf is an Mf temperature (°C) of the alloy measured according to JIS H7101:2002, and $Mf_{900°C}$ is an Mf temperature (°C) of the alloy measured according to JIS H7101:2002 after the alloy is heated at 900°C for 1 hour. Note that $Mf_{900°C}$ is an Mf temperature after heating so as to remove strain applied by predetermined processing or the like described later, and can be a temperature equivalent to the Mf temperature before applying predetermined processing or the like described later.

By satisfying the above formula (5), the thermal storage material can be used in a wider range of applications. The left side of the above formula (5) is preferably 7°C or more, more preferably, the left side of the above formula (5) is 10°C or more.

The TiNi-based alloy according to the embodiments of the present invention is capable of dissipating heat upon application of external stress after being endothermically heated to a temperature of Af temperature or higher. The heating temperature at this time is not particularly limited, but may be, for example, 200°C or less. As the external stress, heat can be dissipated with a relatively low stress of 500 MPa or less. The lower limit of the external stress is not particularly limited, but may be, for example, 1 MPa or more. In addition, the temperature of the TiNi-based alloy according to the embodiments of the present invention can rise by dissipating heat due to external stress, and in one embodiment, the temperature can change by 3°C or more (preferably 5°C or more) with a relatively low stress of 500 MPa or less (preferably 200 MPa or less) after being endothermically heated to a temperature of Af temperature or higher.

The TiNi-based alloy according to the embodiments of the present invention is excellent in processability and can be processed into various shapes. In one embodiment, the TiNi-based alloy may be plate shape (foil shape), wire shape, or spring shape.

<Thermal storage device>

A thermal storage device according to an embodiments of the present invention includes: the TiNi-based alloy according to the embodiments of the present invention; and a heating unit capable of heating the TiNi-based alloy to a temperature equal to or higher than an austenitic finish temperature (Af temperature) of the TiNi-based alloy and lower than 200°C and capable of maintaining the temperature between a martensite start temperature (Ms temperature) and an austenitic finish temperature (Af temperature) of the TiNi-based alloy. With this device, heat can be stored in the TiNi-based alloy according to the embodiments of the present invention. The configuration of the heating unit is not particularly limited, and a known heating device such as a thermostatic device can be applied.

The thermal storage device according to the embodiments of the present invention may further include an external stress applying unit capable of applying an external stress to the TiNi-based alloy. As a result, external stress can be applied to the stored TiNi-based alloy, and the stored heat can be dissipated to the outside of the TiNi-based alloy. The configuration of the external stress applying unit is not particularly limited, and a known external stress applying device can be applied.

The thermal storage device according to the embodiments of the present invention may include other configurations as long as the object of the present invention can be achieved.

<Method for producing TiNi-based alloy>

An example of a method for producing a TiNi-based alloy according to embodiments of the present invention includes:

(A) processing a TiNi-based alloy material having a martensite start temperature by applying a cross-sectional area change rate of 20% or more; and
(B) a step of heating the processed TiNi-based alloy material to 200 to 800°C.

By the above production method, a TiNi-based alloy having a martensite start temperature (Ms temperature) and satisfying the above formula (1) can be produced. Furthermore, by the above production method, it is also possible to satisfy the above formulas (2) and (5), and the crystallite size can be 30 nm or less.

Hereinafter, each step will be described in detail.

(A) Processing by applying cross-sectional area change rate of 20% or more

A TiNi-based alloy having a martensite start temperature and an arbitrary shape (Herein, in order to distinguish from the TiNi-based alloy (That is, strain is applied by predetermined processing or the like, and a TiNi-based alloy satisfying the above formula (1) is obtained.) according to the embodiments of the present invention, hereinafter, referred to as a "TiNi-based alloy material") is processed with a cross-sectional area change rate of 20% or more. The cross section here is a cross section perpendicular to the longitudinal direction of the TiNi-based alloy material. When the cross-sectional area change rate is less than 20%, there is a possibility that the above formula (1), as well as formulas (2) and (5), are not satisfied due to, for example, small strain. In addition, mainly by this step, the crystallite size can be reduced to 30 nm or less. The processing method is not particularly limited, and processing may be performed by, for example, rolling or wire drawing. The shape after processing is not particularly limited, and may be processed into, for example, a plate shape, a wire shape, or a spring shape. The cross-sectional area change rate can be calculated as $|(S_0-S_1)|/S_0$ (%), where $S_0$ is the cross-sectional area before processing and $S_1$ is the cross-sectional area after processing in the cross section of the TiNi-based alloy material perpendicular to the longitudinal direction.

(B) Step of heating to 200 to 800°C

After the step (A), the TiNi-based alloy material is heated to 200 to 800°C. If it is lower than 200°C, it is difficult to adjust the Ms temperature, and if it is higher than 800°C, the strain disappears, and in any case, there is a possibility that a TiNi-based alloy satisfying the above formula (1), as well as formulas (2) and (5), cannot be obtained. In order to set the Ms temperature to room temperature or more, heating to 350°C or more is preferable. In addition, in order to further change the Ms temperature, it is preferable to set the Ms temperature to 650°C or less. The heating time is not particularly limited, but may be, for example, 30 seconds or more, and preferably 3 minutes or more. From the viewpoint of productivity, the heating time can be, for example, 10 hours or less, and is preferably 2 hours or less. The heating atmosphere is not particularly limited, and may be, for example, in air.

Although an example of the method for producing a TiNi-based alloy according to the embodiments of the present invention has been described, other steps may be included without departing from the object of the present disclosure. For example, there is a possibility that a person skilled in the art who has understood the desired characteristics of the TiNi-based alloy according to the embodiments of the present invention will find a method for producing the TiNi-based alloy having the desired characteristics according to the embodiments of the present invention, other than the above-described production method, through trial and error.

[Examples]

Hereinafter, embodiments of the present invention will be described more specifically with reference to Examples. The embodiments of the present invention are not limited by the following examples, and can be implemented with appropriate modifications within the scope that can be consistent with the above-described and later-described gist, and all of them are included in the scope of the embodiments of the present invention.

[Example 1]

A TiNi-based alloy material having a composition of $Ti_{50.1}Ni_{42.9}Cu_{7.0}$ and a diameter of 1.5 mm was prepared. The TiNi-based alloy material (Test No. 1) was cold-rolling until the cross-sectional area change rate in the cross section perpendicular to the longitudinal direction was 20% or more, the sheet thickness was 0.8 mm or less, and the width was 1.7 mm or more. Thereafter, the TiNi-based alloy material was heated under the conditions shown in Table 1 to obtain TiNi-based alloys of Test Nos. 1 to 8. Test No. 1 is a sample which was not subjected to the cold-rolling and heating, and Test No. 2 is a sample which was subjected to the cold-rolling but was not subjected to the subsequent heating.

[Table 1]

| Test No. | (A) Processing step (cold-rolling) | (B) Heating step |
|----------|-----------------------------------|------------------|
| 1 | No | No |
| 2 | YES | No |

(continued)

| Test No. | (A) Processing step (cold-rolling) | (B) Heating step |
|---|---|---|
| 3 | YES | 300°C, 1h |
| 4 | YES | 400°C, 1h |
| 5 | YES | 500°C, 1h |
| 6 | YES | 600°C, 5min |
| 7 | YES | 600°C, 1h |
| 8 | YES | 900°C, 1h |

For Test No. 1 (no processing and no heating) and Test No. 8 (heated at 900°C for 1 hour after cold-rolling), the phase transformation temperatures (Ms, Mf, and Af) were measured according to JIS H7101:2002. As a result, the phase transformation temperatures of Test No. 1 and Test No. 8 were equivalent to each other (Test No. 1 had Ms of 39°C, Mf of 28°C, and Af of 53°C, and Test No. 8 had Ms of 40°C, Mf of 27°C, and Af of 53°C.). From this result, it can be considered that the strain applied by the cold-rolling was removed by heating at a high temperature for a sufficient time (1 hour at 900°C). In addition, even if the amount of strain is adjusted by heating at a low temperature (for example, 200 to 800°C) after cold-rolling, it can be considered that the strain is removed by heating at 900°C for 1 hour in the same manner thereafter. The heat of phase transformation (martensitic transformation) during cooling measured by DSC was also equivalent between Test No. 1 and Test No. 8. Test No. 2 was also measured in the same manner and found to be Ms < -20°C, Af > 60°C.

Further, the transformation temperature was measured according to JIS H7101:2002 for Test Nos. 3 to 7. The results are summarized in Table 2. $Ms_{900°C}$ (°C), $Af_{900°C}$ (°C), and $Mf_{900°C}$ (°C) were respectively Ms (°C), Af (°C), and Mf (°C) of. Test No. 8.

[Table 2]

| Test No. | Heating | Ms (°C) | Af(°C) | Af - Ms (°C) | Mf (°C) | $\|Ms - Ms_{900°C}\|$ (°C) | $(Af - Ms) - (Af_{900°C} - Ms_{900°C})$ (°C) | $Mf - Mf_{900°C}\|$ (°C) |
|---|---|---|---|---|---|---|---|---|
| 3 | 300°C, 1h | <-20 | - | - | - | >60 | - | - |
| 4 | 400°C, 1h | 22 | 42 | 20 | -2 | 18 | 7 | 29 |
| 5 | 500°C, 1h | 44 | 62 | 18 | 34 | 4 | 5 | 7 |
| 6 | 600°C, 5min | 42 | 59 | 17 | 33 | 2 | 4 | 6 |
| 7 | 600°C, 1h | 46 | 63 | 17 | 38 | 6 | 4 | 11 |
| 8 | 900°C, 1h | 40 | 53 | 13 | 27 | - | - | - |

The results in Table 2 are discussed. The TiNi-based alloys of Test Nos. 3 to 7 satisfied all the requirements specified in the embodiments of the present invention, were capable of individually controlling the phase transformation heat and the phase transformation temperature, and specifically, had a phase transformation temperature (Ms) different from the phase transformation temperature ($Ms_{900°C}$) that can be usually indicated based on a predetermined composition.

The TiNi-based alloys of Test Nos. 3 to 7 satisfied the above Formulas (2) and (5), which were preferable results.

For Test Nos. 4 to 8, the phase transformation heat during cooling was measured by DSC. As a result, Test No. 4 was 20 J/g, Test No. 5 was 21 J/g, Test No. 6 was 20 J/g, Test No. 7 was 24 J/g, and Test No. 8 was 19 J/g, and the phase transformation heats during cooling of Test Nos. 4 to 7 were almost the same (within ±5 J/g) as the phase transformation heat during cooling of Test No. 8 (heated at 900°C for 1 hour), which was a preferable result.

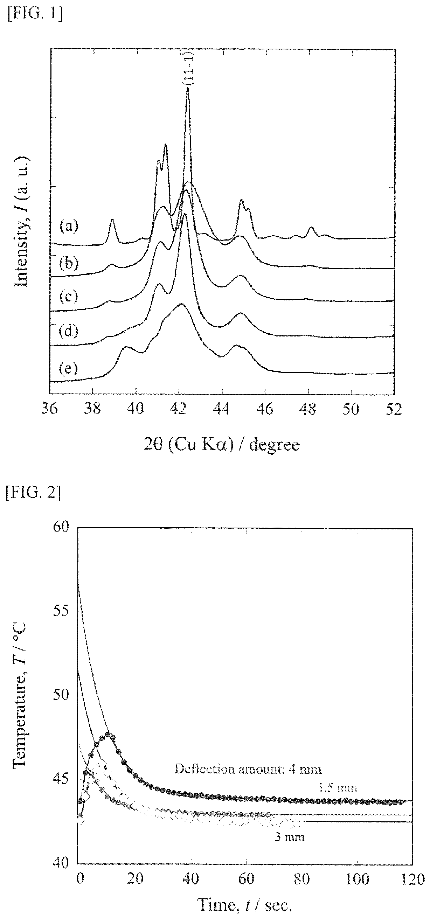

For Test Nos. 1 to 5, X-ray diffraction patterns (X-ray source: CuKα) were obtained at room temperature. The results are shown in Fig. 1. In Fig. 1, the horizontal axis shows a diffraction angle (2θ(CuKα)/°), and the vertical axis shows diffraction intensity (a.u.). Each of the patterns (a) to (e) in Fig. 1 corresponds to the patterns of Test Nos. 1 to 5. The peak fitting was performed using the divided pseudo Voigt function on the peak at the position corresponding to the (11-1) plane of the martensitic phase using the result of Fig. 1, and the crystallite size was estimated from the obtained half value width by the Scherrer equation shown in the above equation (4). As a result of estimating the crystallite size, it can be seen that the crystallite size was reduced by the processing step (A) since Test No. 1 of (a) was 35 nm, Test No. 2 of (b) was 8 nm, Test No. 3 of (c) was 9 nm, Test No. 4 of (d) was 13 nm, and Test No. 5 of (e) was 10 nm.

Test No. 5 was heated from room temperature to 80°C to store heat, and then cooled to 45°C. In this state, a four-point bending test (distance between inner spans: 11 mm, distance between outer spans: 23.5 mm, deflection speed: 20 mm/min, deflection amount: 1.5 mm, 3 mm or 4 mm, maximum stress: about 70 MPa) was performed. At that time, a thermocouple was attached to the central portion of the sample, and the temperature change of the sample at the time of applying deflection was measured. In addition, the sample and the entire four-point bending device were placed in a thermostatic bath, and the measurement was performed after the sample and the entire device reached a predetermined temperature. The results are shown in Fig. 2. In Fig. 2, the horizontal axis shows the measurement time t (seconds), and the vertical axis shows the sample temperature (°C). In Fig. 2, when the deflection amount is 4 mm, the deflection amount is represented by a black circle plot, when the deflection amount is 3 mm, the deflection amount is represented by a white rhombus plot, and when the deflection amount is 1.5 mm, the deflection amount is represented by a gray circle plot. Fig. 2 also includes a curve obtained by extrapolating each plot to 0 seconds. As can be seen from Fig. 2, regardless of the amount of deflection, the temperature rise of 3 to 5°C could be confirmed. When a net temperature rise was estimated by extrapolating the curve to 0 second, the deflection amounts were 4°C, 8°C, and 12°C in the cases of 1.5 mm, 3 mm, and 4 mm, respectively.

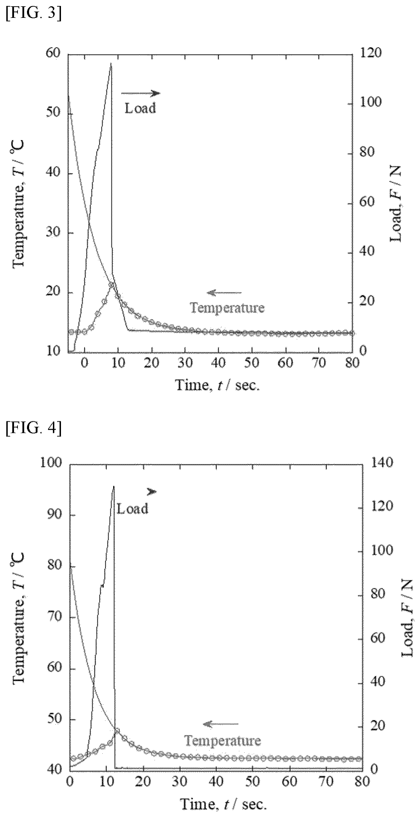

Test No. 4 was heated from room temperature to 60°C to store heat, and then cooled to 15°C. In this state, a tensile test (tensile speed: 10 mm/min) was performed. At that time, a thermocouple was attached to the central portion of the sample, and the temperature change of the sample during the tensile test was measured. In addition, the sample and the entire tensile testing apparatus were placed in a thermostatic bath, and the measurement was performed after the sample and the entire apparatus reached a predetermined temperature. The results are shown in Fig. 3. In Fig. 3, the horizontal axis shows the measurement time t (seconds), the vertical left axis shows the sample temperature (°C), and the vertical right axis shows the tensile test load F (N). In Fig. 3, the sample temperature is represented by a circle plot, and the tensile test load is represented by a solid line. Fig. 3 also includes a curve that partially overlaps with the plot of the sample temperature and extrapolates the sample temperature to 0 seconds. As can be seen from Fig. 3, a temperature rise of 4°C was confirmed when a tensile test load of 116 N (about 90 MPa) was applied. The curve was extrapolated to 0 seconds to estimate a net temperature rise, which was 21°C.

Test No. 5 was heated from room temperature to 80°C to store heat, and then cooled to 45°C. In this state, a tensile test (tensile speed: 10 mm/min) was performed. At that time, a thermocouple was attached to the central portion of the sample, and the temperature change of the sample during the tensile test was measured. In addition, the sample and the entire tensile testing apparatus were placed in a thermostatic bath, and the measurement was performed after the sample and the entire apparatus reached a predetermined temperature. The results are shown in Fig. 4. In Fig. 4, the horizontal axis shows the measurement time t (seconds), the vertical left axis shows the sample temperature (°C), and the vertical right axis shows the tensile test load F (N). In Fig. 4, the sample temperature is represented by a circle plot, and the tensile test load is represented by a solid line. Fig. 4 also includes a curve that partially overlaps with the plot of the sample temperature and extrapolates the sample temperature to 0 seconds. As can be seen from Fig. 4, a temperature rise of 6°C was confirmed when a tensile test load of 130 N (about 100 MPa) was applied. In addition, when a net temperature rise was estimated by extrapolating the curve to 0 seconds, it was 38°C.

[Example 2]

A TiNi-based alloy material having a composition of $Ti_{49.5}Ni_{50.5}$ and a diameter of 1.5 mm was prepared (and labeled as TiNi-based alloy of Test No. 9.). The TiNi-based alloy material (Test No. 9) was cold-rolling until the cross-sectional area change rate in the cross section perpendicular to the longitudinal direction was 20% or more, the sheet thickness was 0.8 mm or less, and the width was 1.7 mm or more. Thereafter, the TiNi-based alloy material after cold-rolling was heated under the conditions shown in Table 3 to obtain TiNi-based alloys of Test Nos. 10 to 15.

[Table 3]

| Test No. | (A) Processing step (cold-rolling) | (B) Heating step |
|---|---|---|
| 9 | No | No |
| 10 | YES | 300°C, 1h |
| 11 | YES | 400°C, 1h |
| 12 | YES | 500°C, 1h |
| 13 | YES | 600°C, 5min |
| 14 | YES | 600°C, 1h |
| 15 | YES | 900°C, 1h |

The transformation temperatures (Ms, Mf, and Af) were measured according to JIS H7101:2002 for Test No. 9 (not subjected to cold-rolling or heating) and Test No. 15 (heated at 900°C for 1 hour after cold-rolling). As a result, similarly to Example 1, the transformation temperatures of Test No. 9 and Test No. 15 were equivalent to each other. The phase transformation heat during cooling measured by DSC was also equivalent in Test No. 9 and Test No. 15.

Further, for Test Nos. 10 to 14, the transformation temperatures (Ms, Mf, and Af) were measured according to JIS H7101:2002. The results are summarized in Table 4. $Ms_{900°C}$ (°C), $Af_{900°C}$ (°C), and $Mf_{900°C}$ (°C) were Ms (°C), Af (°C), and Mf (°C) of Test No. 15, respectively.

[Table 4]

| Test No. | Heating | Ms (°C) | Af (°C) | Af - Ms (°C) | Mf (°C) | $\lvert Ms - Ms_{900°C}\rvert$ (°C) | $(Af - Ms) - (Af_{900°C} - Ms_{900°C})$ (°C) | $\lvert Mf - Mf_{900°C}\rvert$ (°C) |
|---|---|---|---|---|---|---|---|---|
| 10 | 300°C, 1h | <-20 | - | - | - | >22 | - | - |
| 11 | 400°C, 1h | <-20 | - | - | - | >22 | - | - |
| 12 | 500°C, 1h | <-20 | - | - | - | >22 | - | - |
| 13 | 600°C, 5min | <-20 | - | - | - | >22 | - | - |
| 14 | 600°C, 1h | -5 | 23 | 28 | - | 7 | 2 | - |
| 15 | 900°C, 1h | 2 | 28 | 26 | - | - | - | - |

The following can be said from the results of Table 4. The TiNi-based alloys of Test Nos. 10 to 14 satisfied all the requirements specified in the embodiments of the present invention, were capable of individually controlling the phase transformation heat and the phase transformation temperature, and specifically, had a phase transformation temperature (Ms) different from the phase transformation temperature ($Ms_{900°C}$) that can be usually indicated based on a predetermined composition.

For Test Nos. 14 and 15, the phase transformation heats during cooling were measured by DSC. As a result, the phase transformation heat during cooling of Test No. 14 was equivalent (13 J/g) to the phase transformation heat during cooling of Test No. 15 (heated at 900°C for 1 hour), which was a preferable result.

In addition, as an example of being able to be processed into other shapes, the following experiment was performed.

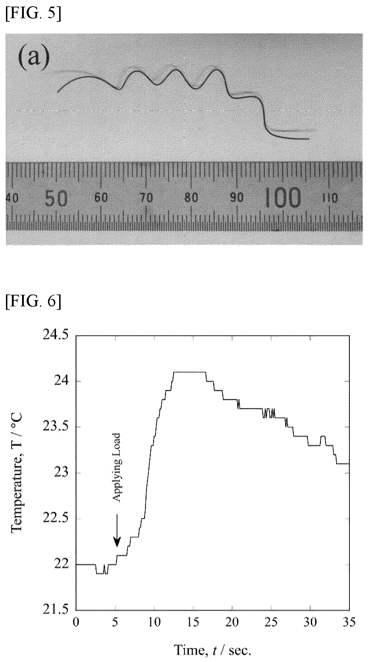

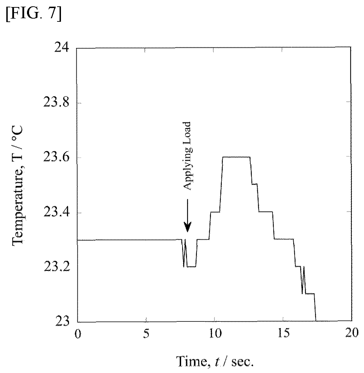

A TiNi-based alloy material having a composition of $Ti_{49.5}Ni_{50.5}$ and a diameter of 0.3 mm was prepared. The TiNi-based alloy material was fixed into a helical shape, and then heated at 500°C for 5 minutes to prepare a TiNi alloy coil (Test No. 16). A photograph of Test No. 16 is shown in Fig. 5. Fig. 6 shows the result of examining the temperature change of the sample when a thermocouple is attached to the sample and tensile deformation is performed by hand at room temperature, and Fig. 7 shows the result of examining the temperature change of the sample when a thermocouple is attached to the sample and compressive deformation is performed by hand at room temperature. In Figs. 6 and 7, the horizontal axis shows the measurement time t (second), and the vertical axis shows the sample temperature (°C). In Fig. 6, the sample temperature is represented by a solid line, and the timing at which a load of tensile deformation (or compressive deformation) is applied is represented by an arrow. As shown in Fig. 6, a temperature rise of about 2°C was confirmed by tensile deformation, and as shown in Fig. 7, a temperature rise of about 0.3°C was confirmed by compressive deformation.

This application claims priority based on Japanese Patent Application No. 2023-027638 filed on February 24, 2023. Japanese Patent Application No. 2023-027638 is incorporated herein by reference.

**Claims**

1. A TiNi-based alloy having a martensite start temperature (Ms temperature) and satisfying the following formula (1):

$$\lvert Ms - Ms_{900°C}\rvert \geq 2°C \cdots (1)$$

wherein Ms is an Ms temperature (°C) of the alloy measured according to JIS H7101:2002, and $Ms_{900°C}$ is an Ms temperature (°C) of the alloy measured according to JIS H7101:2002 after the alloy is heated at 900°C for 1 hour.

2. The TiNi-based alloy according to claim 1, further satisfying the following formula (2):

$$(Af - Ms) - (Af_{900°C} - Ms_{900°C}) \geq 2°C \cdots (2)$$

wherein Af is an austenitic finish temperature (Af temperature) (°C) of the alloy measured according to JIS H7101:2002, and $Af_{900°C}$ is an Af temperature (°C) of the alloy measured according to JIS H7101:2002 after the alloy is heated at 900°C for 1 hour.

3. The TiNi-based alloy according to claim 1 or 2, having a composition represented by the following formula (3):

$$Ti_xNi_{100-x-y}My \cdots \qquad (3)$$

wherein x is a molar ratio (%) of Ti to the total number of moles of Ti, Ni and M in the alloy and satisfies $35 \leq x \leq 55$, y is a molar ratio (%) of M to the total number of moles of Ti, Ni and M in the alloy and satisfies $0 \leq y \leq 20$, and M is one or more selected from the group consisting of Cu, Co, Cr, Zr and Fe.

4. The TiNi-based alloy according to any one of claims 1 to 3, wherein a crystallite size of the alloy is 30 nm or less.

5. The TiNi-based alloy according to any one of claims 1 to 4, wherein the alloy is capable of dissipating heat upon application of external stress after being endothermically heated to a temperature of Af or higher.

6. The TiNi-based alloy according to any one of claims 1 to 5, wherein the alloy has a plate shape, a wire shape, or a spring shape.

7. A thermal storage device comprising:

the TiNi-based alloy according to any one of claims 1 to 6; and
a heating unit capable of heating the TiNi-based alloy to a temperature equal to or higher than an austenitic finish temperature (Af temperature) of the TiNi-based alloy and lower than 200°C and capable of maintaining the temperature between a martensite start temperature (Ms temperature) and an austenitic finish temperature (Af temperature) of the TiNi-based alloy.

8. The method for producing the TiNi-based alloy according to any one of claims 1 to 6, the method comprising:

processing a TiNi-based alloy material having a martensite start temperature (Ms temperature) at a cross-sectional area change rate of 20% or more; and
heating the processed TiNi-based alloy material to 200 to 800°C.

[FIG. 1]

[FIG. 2]

[FIG. 3]

[FIG. 4]

[FIG. 5]

[FIG. 6]

[FIG. 7]

## INTERNATIONAL SEARCH REPORT

| International application No. |
| --- |
| **PCT/JP2024/005809** |

**A. CLASSIFICATION OF SUBJECT MATTER**

*C22C 19/03*(2006.01)i; *C09K 5/06*(2006.01)i; *C22C 14/00*(2006.01)i; *C22C 30/02*(2006.01)i; *C22F 1/00*(2006.01)i; *C22F 1/10*(2006.01)i; *C22F 1/16*(2006.01)i; *C22F 1/18*(2006.01)i

FI: C22C19/03 Z; C22C30/02; C22C14/00 Z; C22F1/10 Z; C22F1/16 Z; C22F1/18 H; C09K5/06 Z; C22F1/00 623; C22F1/00 625; C22F1/00 630F; C22F1/00 650Z; C22F1/00 651Z; C22F1/00 685Z; C22F1/00 686A; C22F1/00 691B; C22F1/00 691C; C22F1/00 694A

According to International Patent Classification (IPC) or to both national classification and IPC

**B. FIELDS SEARCHED**

Minimum documentation searched (classification system followed by classification symbols)

C22C19/03; C09K5/06; C22C14/00; C22C30/02; C22F1/00; C22F1/10; C22F1/16; C22F1/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2022/102586 A1 (PANASONIC INTELLECTUAL PROPERTY MANAGEMENT CO., LTD.) 19 May 2022 (2022-05-19) | 1-8 |
| A | JP 61-276947 A (HITACHI METALS LTD.) 06 December 1986 (1986-12-06) | 1-8 |
| A | JP 6-2059 A (THE FURUKAWA ELECTRIC CO., LTD.) 11 January 1994 (1994-01-11) | 1-8 |
| A | JP 2-88737 A (THE FURUKAWA ELECTRIC CO., LTD.) 28 March 1990 (1990-03-28) | 1-8 |
| A | JP 2017-8373 A (NATIONAL INSTITUTE FOR MATERIALS SCIENCE) 12 January 2017 (2017-01-12) | 1-8 |
| A | US 2004/0187980 A1 (QUESTEK INNOVATIONS LLC) 30 September 2004 (2004-09-30) | 1-8 |

☐ Further documents are listed in the continuation of Box C.  ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 April 2024** | **14 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/005809**

| Patent document cited in search report | | | Publication date (day/month/year) | Patent family member(s) | | | Publication date (day/month/year) |
|---|---|---|---|---|---|---|---|
| WO | 2022/102586 | A1 | 19 May 2022 | US | 2023/0400261 | A1 | |
| | | | | CN | 116324003 | A | |
| JP | 61-276947 | A | 06 December 1986 | (Family: none) | | | |
| JP | 6-2059 | A | 11 January 1994 | (Family: none) | | | |
| JP | 2-88737 | A | 28 March 1990 | (Family: none) | | | |
| JP | 2017-8373 | A | 12 January 2017 | (Family: none) | | | |
| US | 2004/0187980 | A1 | 30 September 2004 | US | 2008/0000556 | A1 | |
| | | | | WO | 2005/111255 | A2 | |
| | | | | EP | 1629134 | A2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020144982 A

- JP 2023027638 A

**Non-patent literature cited in the description**

- *Scientific Reports*, 2019, vol. 9, 13203

- *J. Mater. Sci.*, 2021, vol. 56, 8243-8250